## Europäisches Patentamt

## European Patent Office

## Office européen des brevets

(11) Veröffentlichungsnummer: **0 181 485**
**B1**

(12) **EUROPÄISCHE PATENTSCHRIFT**

(45) Veröffentlichungstag der Patentschrift:
08.02.89

(51) Int. Cl.⁴: **C 09 K 9/02**

(21) Anmeldenummer: **85112657.3**

(22) Anmeldetag: **07.10.85**

(54) Verglasungen mit temperaturgesteuerter Lichtdurchlässigkeit.

(30) Priorität: **05.10.84 DE 3436477**

(43) Veröffentlichungstag der Anmeldung:
**21.05.86 Patentblatt 86/21**

(45) Bekanntmachung des Hinweises auf die Patenterteilung:
**08.02.89 Patentblatt 89/6**

(84) Benannte Vertragsstaaten:
**FR GB IT NL**

(56) Entgegenhaltungen:
**GB-A- 2 038 478**

**Die Akte enthält technische Angaben, die nach dem Eingang der Anmeldung eingereicht wurden und die nicht in dieser Patentschrift enthalten sind.**

(73) Patentinhaber: **Röhm GmbH, Kirschenallee
Postfach 4242, D-6100 Darmstadt 1 (DE)**

(72) Erfinder: **Siol, Werner, Dr., Goerdelerweg 34,
D-6100 Darmstadt (DE)**
Erfinder: **Otto, Hans Joachim, Romillystrasse 29,
D-6081 Biebesheim (DE)**
Erfinder: **Terbrack, Ulrich, Berlinerstrasse 3,
D-6107 Reinheim 2 (DE)**

ACTORUM AG

## Beschreibung

### Gebiet der Erfindung

Die Erfindung betrifft Verglasungen mit temperaturgesteuerter, d.h. auf eine Temperaturschwelle ansprechender Lichtdurchlässigkeit.

### Stand der Technik

In den meisten Gegenden der Erde kommt es zumindest in den Sommermonaten vor, dass innerhalb bewohnter oder sonstiger genutzter Räume oder unter Überdachungen Temperaturen auftreten, die oberhalb der Behaglichkeitszone liegen und/oder mit der angestrebten Nutzung der Räume unvereinbar sind. Einen wesentlichen Beitrag zu dieser Erwärmung liefert in vielen Fällen einfallendes Licht. Die üblicherweise anzutreffende lichtdurchlässige Verglasung mit Mineral- oder Kunststoffglas wirkt normalerweise als Sperre für den Wärmedurchgang. Die nächstliegende, seit jeher angewendete Massnahme zur Abhilfe besteht darin, den Lichteinfall in Abhängigkeit von bestimmten Messdaten, insbesondere in Abhängigkeit von der Raumtemperatur zu reduzieren oder ganz auszuschliessen, z.B. mittels Abdeckungen, Jalousien, Blenden, Vorhängen u.ä. Dabei werden lichtreflektierende und/oder absorbierende Schichten innerhalb oder vorzugsweise ausserhalb der in Frage kommenden Räume angebracht, und dieser Vorgang lässt sich auch — allerdings unter beträchtlichen Kosten — automatisieren.

Eine besondere Regelautomatik mitsamt den damit verbundenen Kosten und ihren Risiken könnten entfallen, wenn es gelingt, den Lichteinfall bzw. die auftretende Wärme selbst im Sinne der Wärmeregulierung bzw. der Regulierung der Lichtdurchlässigkeit auszunutzen.

Körper mit reversibel temperaturabhängiger Transparenz sind Gegenstand der DE-OS 2 738 253. Derartige Körper bestehen aus wenigstens einem optisch transparenten Polymer- und/oder Harzmaterial als Matrix (A) und wenigstens einer zumindest teilweise in diesem Matrixmaterial unlöslichen organischen Substanz (B), die nach der Einlagerung in das Matrixmaterial bei der Zieltemperatur der optischen Transparenzveränderung schmilzt oder erstarrt und deren Brechungsindex entweder oberhalb oder unterhalb der Zieltemperatur der optischen Transparenzveränderung mit dem Brechungsindex des Matrixmaterials im wesentlichen übereinstimmt. (B) bildet zu jeder Zeit eine in (A) eingelagerte diskrete disperse Phase. Als geeignete organische Substanz (B) werden niedermolekulare Substanzen wie Alkanole, Alkylamine, Alkane, Alkene, Alkine, gesättigte oder ungesättigte Mono- oder Dicarbonsäuren, deren Ester und Amide, Halogenfettsäuren, Arylcarbonsäuren und deren Abkömmlinge, Thioalkohole, Thiocarbonsäuren und deren Derivate u.ä. genannt.

Vorgesehen ist die Verwendung derartiger Körper für Temperaturmesseinrichtungen, Wärmeeinrichtungen oder als Abschirmeinrichtungen für Gewächshäuser, Frühbeete, Industriebauten, Bürofenster und Wohnraumfenster, Fahrzeugfenster u. dergl.

Aus der DE-OS 2 907 352 ist die Anwendung ähnlich aufgebauter Systeme, die in disperser Form Tröpfchen oder Kristallite von niedermolekularen Substanzen (vorzugsweise M = 300-500) eingebettet in einer Polymermatrix enthalten, zur Speicherung von Daten bekannt.

In der JP-OS 8 378 758 (Chem. Abstr. 99.213730n) wird ein temperatursensitives lichtabschirmendes Material beschrieben, das aus Laminaten von transparenten Scheiben mit Schichten besteht, die Poly(N-isopropylmethacrylamid), Wasser und gegebenenfalls einen Zusatz zur Regulierung des Trübungspunkts enthalten. Aus der DE-OS 2 658 643 ist eine Glas-Gel-Glas-Sandwich-Struktur mit variabler Transparenz bekannt. Als Flüssigkeit, die nahe Raumtemperatur irreversibel in den Gelzustand übergeht, wird ein Acrylamid-N-methylolacrylamid-Copolymer empfohlen; die Variabilität der Transparenz wird durch einen Zusatz von Polymethylvinylether oder Vinylcaprolactam erreicht.

Aus der US-PS 4 307 942 ist ein Apparat zur Verhinderung der Sonneneinstrahlung oberhalb einer vorgegebenen Temperatur bekannt, bestehend aus einer Schicht eines porösen Polymermaterials, einem Lösungsmittel und einer temperaturempfindlichen Substanz, mit der das poröse Material imprägniert ist und die eine negative Lösungsentropie im besagten Temperaturbereich hat.

Ein thermoplastischer Film, mit temperaturabhängiger Licht-Transmission wird in der JP-OS 76,132241 (Chem. Abstr. 86,91221n) beschrieben.

Ein derartiger thermoplastischer Film mit darin dispergierten Polymerpartikeln mit Durchmesser 1-150 µ soll bei 40°C weniger als 90% der Transmission bei 10°C besitzen. Beispielhaft wird angegeben, dass 25 Teile Polymermethacrylat (PMMA) und 75 Teile eines Ethylen-Vinylacetat-Copolymeren (72:28) 10 min bei 180°C und 80 rpm gerührt und zu einer 1 mm dicken Schicht verpresst werden, die PMMA-Partikel mit 5 µ Durchmesser enthält.

Die JP-OS 7 912 518 (Chem. Abstr. 91, 124387e) lehrt Harze, die nur in einem engen Temperaturbereich transparent sind. Dazu werden 2-50 Teile eines Ethylen-Vinylacetat-Copolymeren mit 10 bis 35 Gew.-% Vinylacetat in 50-98 Teilen Methylmethacrylat (MMA) oder einer hauptsächlich aus MMA bestehenden Monomerenmischung gelöst oder dispergiert und zwischen Glasplatten radikalisch polymerisiert.

### Aufgabe

Es bestand nach wie vor die Aufgabe, Verlagungssysteme mit temperaturgesteuerter Lichtdurchlässigkeit zur Verfügung zu stellen, welche die traditionellen Verglasungen ergänzen oder ersetzen können. Derartige Verglasungen sollen den üblicherweise zu stellenden mechanischen und optischen Anforderungen genügen, sollen — wenn möglich — einfach aufgebaut sein, keine zusätzlichen apparativen und technologischen Anforderungen und Probleme aufwerfen, also insgesamt kostengünstig sein.

Vorzugsweise sollten die Verglasungssysteme eine reversible temperaturgesteuerte Lichtdurchlässigkeit besitzen und ihre Funktionsfähigkeit sollte über einen möglichkeit langen Zeitraum gewährleistet sein. Vorteilhafterweise sollte die Schwellen- oder Zieltemperatur, bei der der Übergang von Lichtdurchlässigkeit zu reduzierter Durchlässigkeit bzw. Undurchlässigkeit eintritt, vorbestimmbar sein, dann aber reproduzierbar festliegen.

In erster Linie handelt es sich bei den erfindungsgemässen Verglasungen um Schutzverglasungen für Räume und sonstige Funktionseinheiten wie z.B. Teile von Gebäuden oder Fahrzeugen in Form von Dächern, Wänden, Fenstern, Türen.

*Lösung*

Es wurde gefunden, dass die erfindungsgemässen Verglasungssysteme die gestellte Aufgabe erfüllen.

Die erfindungsgemässen Verglasungssysteme mit temperaturgesteuerter Lichtdurchlässigkeit enthalten oder bestehen aus Polymermischungen P, gebildet aus wenigstens zwei Polymerkomponenten $P_1$ und $P_2$, wobei die Polymermischung P eine untere kritische Lösungstemperatur (LCST) besitzt, so dass oberhalb der unteren kritischen Lösungstemperatur Entmischung zu den Polymerkomponenten $P_1$ und $P_2$ stattfindet, wobei die Brechungsindices der Polymerkomponenten $P_1$ und $P_2$ voneinander abweichen. Bei der erfindungsgemäss vorliegenden Anwendung als Element von Verglasungen, insbesondere Schutzverglasungen, ist die Reversibilität der Phasenauftrennung oberhalb des LCST von entscheidender Bedeutung. Beim Abkühlen unterhalb der LCST soll das (oberhalb der LCST als getrennte Polymerphasen $P_1$ und $P_2$ vorliegende) System wieder in den Zustand der Einphasigkeit, d.h. der völligen Verträglichkeit zurückkehren und zwar möglichst ohne vorgängige sonstige Beeinflussung des Systems beispielsweise durch Tempern bei bestimmten Temperaturen u.ä.

Dieser Vorgang sollte restlos reversibel sein, d.h. sich beliebig oft und mit beliebiger, aber an den praktisch vorkommenden Temperaturveränderungen orientierter Geschwindigkeit wiederholen lassen. Die in der Praxis anzutreffenden Temperaturveränderungen liegen im allgemeinen bei 0,01 bis 20°C pro Minute.

*Zur LCST:*

Unterschiedliche Polymerspecies sind infolge der (den langen Polymerketten zuzuschreibenden) niedrigen Mischungsentropie und der positiven Mischungsenergie zwischen Polymeren im allgemeinen untereinander unverträglich. Gewisse Ausnahmen von dieser Regel haben die Fachleute zur theoretischen Durchdringung des Phänomens herausgefordert.

Beispiele für vorhandene Mischbarkeit sind u.a. Polyvinylidenfluorid mit Polymethylmethacrylat (PMMA) oder mit Polyethylmethacrylat (US-PS 3 253 060; US-PS 3 458 391; US-PS 3 459 843). Eine zusammenfassende Darstellung über mischbare Polymersysteme findet sich z.B. bei D.R. Paul et al. in Polymer Engineering & Science 18 (16) 1225-34 (1978); J. Macromol. Sci. - Rev. Macromol. Chem. C 18, (1) 109-168 (1080). Zum Nachweis der Mischbarkeit wurde häufig die Glastemperatur Tg herangezogen. Als ein weiterer Test auf die Mischbarkeit von unter sich verschiedenen Polymeren wird das Auftreten der unteren kritischen Lösungstemperatur (Lower Critical Solution Temperature = LCST) herangezogen.

Das Auftreten der LCST beruht auf dem Vorgang, dass sich beim Erwärmen die bis anhin klare, homogene Polymermischung in Phasen auftrennt und optisch trübe bis opak wird. Dieses Verhalten stellt nach der Literatur einen eindeutigen Beweis dafür dar, dass die ursprüngliche Polymermischung aus einer einzigen, im Gleichgewicht befindlichen homogenen Phase bestanden hatte.

Bei manchen Systemen ist die Entmischung ein beim Abkühlen reversibler Vorgang. Für folgende Polymersysteme wurde bisher LCST-Verhalten berichtet: PMMA/Styrol-Acrylnitril-Copolymere; Polystyrol/Polyvinylmethylether; Poly(ε-caprolacton)/Styrol-Acrylnitril-Copolimere; Chlorkautschuk/Ethylen-Vinylacetat-Copolymere; PVC/Ethylen-Vinylacetat-Copolymere; Poly(ε-caprolacton/Polycarbonat; Polyvinylidenfluorid/PMMA; Polyvinylidenfluorid/Polyethylmethacrylat; Polyvinylidenfluorid/Polymethylacrylat; Polyvinylidenfluorid/Polyethylacrylat; Polyphenylenoxid/o-Chlorstyrol-p-Chlorstyrol-Copolymere; Polystyrol/Polycarbonat des Tetramethylbisphenol-A; Polyvinylnitrat/Polymethylacrylat (D.R. Paul et al., loc. cit.); sowie für die Polymersysteme PVC/Poly- η-Hexylmethacrylat, PVC/Poly-n-butylacrylat, Poly-n-propylacrylat (D.J. Walsh and, J.G. McKeown, Polymer 21, 1330-1334 (1980) sowie für chloriertes Polyethylen/Butylacrylat (D.J. Walsh et al., Makromol. Chem. 184, 1459-1468 (1983) und für PMMA/chloriertes Polyethylen (D.J. Walsh et. al., Polymer 23, 336-339 (1982); Kirk-Othmer 3rd. Ed. Vol. 18, 443-478, J. Wiley (1982).

Abb. 1   zeigt das Phasendiagramm solcher Polymermischungen mit unterer kritischer Lösungstemperatur

Abb. 1: Phasendiagramm von Polymermischungen mit unterer kritischer Lösungstemperatur (LCST)

Verträgliche Polymermischungen, die eine LCST aufweisen, wurden bisher ausschliesslich unter rein wissenschaftlichen Gesichtspunkten untersucht. Eine Nutzung des Phänomens zur Lösung definierter technischer Aufgaben wurde bisher nicht vorgeschlagen. Dies mag auch darin begründet sein, dass die Trübungspunkte bisher bekannter verträglicher Polymermischungen mit LCST häufig erst bei sehr hohen Temperaturen beobachtet wurden, die in der Grössenordnung der Zersetzungstemperatur der Polymeren liegen können.

Voraussetzung für die Eignung der Polymermischungen P als Bestandteil einer Verglasung mit temperaturgesteuerter Lichtdurchlässigkeit ist in der Regel, dass sich die Brechungsindices der einzelnen Polymerkomponenten unterscheiden. Zweckmässigerweise unterscheiden sich die Polymerkomponenten $P_1$ und $P_2$ der Polymermischung P in ihren Brechungsindices um mindestens den Wert 0,01, vorzugsweise um 0,03. (Die Bestimmung des Brechungsindex wird wie üblich vorgenommen. Vgl. R. Vieweg, D. Braun in «Kunststoff-Handbuch», Bd. I Grundlagen pp. 647-651, Carl Hanser Verlag, München-Wien 1975.)

Besonders geeignet im Sinne der vorliegenden Erfindung sind Polymermischungen P mit LCST, deren LCST unterhalb 150°C, vorzugsweise unterhalb 100°C, speziell unterhalb 50°C liegt. Für das Verfahren ist ferner vorteilhaft, wenn die Bedingung erfüllt ist, dass bei Temperaturerhöhung von einem Wert 10°C unter der LCST auf einen Wert 10°C oberhalb der LCST eine Reduzierung der Transmission von wenistens 20% erfolgt.

Die Bestimmung der Transmission soll dabei an einem 0,1 mm dicken, nicht pigmentierten Probeplättchen vorgenommen werden. (Die Bestimmung der Transmission erfolgt nach DIN 1349).

Besonders bevorzugt soll die Transmission der Probe im Bereich von 10°C unterhalb der LCST bis mindestens 50°C unterhalb der LCST mehr als 80% betragen; insbesondere soll die Reduzierung der Transmission von über 80% auf weniger als 60% in einem Temperaturintervall von <20°C erfolgen.

Anzustreben ist weiter, dass oberhalb der LCST, d.h. in der entmischten Form, zwei Polymerphasen (aus $P_1$ und $P_2$ bzw. $P_3$) nebeneinander vorliegen, von denen wenigstens eine Polymerphase eine Domänengrösse im Bereich von 10 nm$^2$ bis 10$^8$ nm$^2$, vorzugsweise 10$^2$ nm$^2$ bis 10$^6$ nm$^2$ aufweist, wobei sich die Polymerphasen in ihren Brechungsindices um wenigstens 0,01 unterscheiden. Von der materiellen Zusammensetzung her ist es vorteilhaft, wenn die Glastemperatur $T_g$ der verträglichen Polymermischung P um wenigstens 20°C, vorteilhaft um wenigstens 50°C oder besonders vorteilhaft um wenigstens 100°C unterhalb der LCST liegt. Unter der Glastemperatur der verträglichen Polymermischung P sei die Glastemperatur des (homogenen) Gesamtsystems, bestehend aus den Polymerisaten $P_1$ und $P_2$, gegebenenfalls weiteren polymeren und niedermolekularen Bestandteilen wie Lösungsmittel bzw. Weichmacher W, Stabilisatoren, Farbstoffen u.ä. verstanden. (Zur Bestimmung der Tg vgl. D.R. Paul & S. Newman, Polymer Blends, Vol. I, Chap. 5, Academic Press, New York, 1978). Vorzugsweise soll die Glastemperatur der verträglichen Polymermischung P unterhalb 50°C, besonders bevorzugt unter 0°C liegen. (Anstelle der Glastemperatur Tg kann als Bezugsgrösse auch die nach DIN 7724 bestimmte, im Durchschnitt um etwa 30° höher liegende dynamische Einfriertemperatur Tg (dyn) angegeben werden. (Vgl. R. Vieweg, F. Esser in Kunststoff-Handbuch. Bd. IX, 333-339, Carl Hanser Verlag, München 1975).

Die Polymermischung P aus mindestens zwei verschiedenen Polymeren $P_1$ und $P_2$ kann als Gesamtsystem — wie bereits ausgeführt — gegebenenfalls noch eine oder mehrere niedermolekulare organische Substanzen W enthalten. Zweckmässigerweise hat die niedermolekulare Substanz W die Eigenschaft, für wenigstens eines der beiden Polymeren $P_1$ und $P_2$ ein Solvens zu sein.

Weiter kann die niedermolekulare Substanz W einen von den Polymeren $P_1$, $P_2$ oder weiteren im System P vorhandenen Polymeren abweichenden Brechungsindex aufweisen. Dadurch ergibt sich die Möglichkeit, dass auch bei nur geringfügigem Unterschied im Brechungsindex von $P_1$ und $P_2$ wegen der Ungleichverteilung der niedermolekularen Substanz W zwischen den beiden unverträglichen Polymeren eine Lichtstreuung hervorgerufen wird. Dabei muss jedoch berücksichtigt werden, dass jede Asymmetrie in der Polymer-Lösungsmittel-Wechselwirkung in einem ternären System Polymer $P_1$/Polymer $P_2$/Lösungsmittel eine Phasentrennung hervorrufen kann. Man wird daher im allgemeinen solche Lösungsmittel verwenden, die eine Asymmetrie in der Polymer-Lösungsmittel-Wechselwirkung aufweisen.

In der Regel ist die niedermolekulare Substanz W eine organische Substanz, d.h. nicht Wasser. Vorzugsweise gehören die niedermolekularen Substanzen W der Gruppe der Weichmacher und/oder Lösungsmittel für Polymere an. (Vgl. H. Gnamm, O. Fuchs, Lösungsmittel und Weichmachungsmittel, 8. Auflage, Bd. I & II. Wissenschaftliche Verlagsgesellschaft mbH, Stuttgart, 1980). Vorteilhafterweise besitzen die niedermolekularen organischen Substanzen W einen Festpunkt unterhalb 10°C; günstig ist, wenn der Festpunkt wenigstens 50°C unterhalb der LCST des Polymersystems P aus $P_1$ und $P_2$ usw. liegt.

Im allgemeinen beträgt der Gehalt an den niedermolekularen organischen Substanzen W 0,1 bis 1000 Gew.-%, vorzugsweise 5 bis 300 Gew.-%, bezogen auf das Gewicht der Polymeren $P_1$ und $P_2$ usw.

Der Zusatz von niedermolekularen Substanzen dient in der Regel dazu, die Glastemperatur der Polymermischung P und die Glastemperatur der Polymeren $P_1$ und $P_2$ zu erniedrigen und damit die Beweglichkeit der Polymeren $P_1$, $P_2$ und der Polymermischung P zu erhöhen. Eine gute Beweglichkeit der Polymerketten ist vor allem zur Erzielung eines reversiblen Phasenüberganges von Bedeutung. Insbesondere kann bei unzureichender Beweglichkeit der Polymeren bei schnellem Abkühlen von einer Temperatur oberhalb LCST, bei der zwei getrennte Polymerphasen $P_1$ und $P_2$ nebeneinander vorliegen, die Zweiphasigkeit des Systems auch bei Temperaturen unterhalb LCST eingefroren werden. Bei unzureichender Polymerbeweglichkeit ist der Phasenübergang demzufolge häufig irreversibel.

Darüber hinaus kann die Polymerkette auch durch Copolymerisation mit weichmachenden Monomeren weichgemacht werden ( = innere Weichmachung). Diese innere Weichmachung bietet gegenüber dem Zusatz niedermolekularer Substanzen den Vorteil, dass der Weichmacher nicht auswandern kann.

Weiterhin kann der Zusatz von Weichmachern oder anderen niedermolekularen Substanzen dazu benutzt werden, die Lage der LCST und damit die Lage des Übergangs «klar nach trüb» und umgekehrt in den gewünschten Temperaturbereich zu lenken (Vergleiche hierzu R.E. Bernstein et al., Macromolekules 10, 681 bis 686, 1977).

*Die Polymermischung P*

Die Polymermischung P besteht aus wenigstens zwei Polymerkomponenten $P_1$ und $P_2$. Die Polymerkomponenten $P_1$ und $P_2$ sind strukturell verschieden, und zwar von einer solchen komplementären Unähnlichkeit, dass energetische Wechselwirkungen zwischen den Polymeren $P_1$ und $P_2$ begünstigt sind. Die Mischungsenthalpie für die beiden Polymerkomponenten $P_1$ und $P_2$ ist also exotherm. Die Mischbarkeit der beiden Polymeren $P_1$ und $P_2$ beruht demzufolge nach gegenwärtigen Erkenntnissen auf der exothermen Wechselwirkung der einzelnen Segmentpaare.

Diese Wechselwirkung kann unterschiedliche Mechanismen einschliessen, so z.B. Salzbildung, Wasserstoffbrückenbindungen, Komplexbildung, Kopplung von Phenylgruppen, dipolare Wechselwirkungen. Dabei genügt es in der Regel, dass die Mischungsenthalpie der Polymerkomponenten $P_1$ und $P_2$ nur geringfügig negativ ist.

Die Mischungsentropie ist in der Regel positiv (spielt aber aufgrund des geringen Beitrags nur eine untergeordnete Rolle). Mit diesen Voraussetzungen können die z.Z. bekannten verträglichen Polymermischungen verstanden werden und neue veträgliche Polymerpaare aufgefunden werden. (Vergleiche: D.R. Paul et al., J. Macromol. Sci. — Rev. Macromol. Chem. C. 18 (1), 109 bis 168, 1980).

Der erfindungsgemässe Einsatz von veträglichen Polymermischungen P mit temperaturgesteuerter Lichtdurchlässigkeit setzt bei einer Vielzahl von Anwendungen, z.B. zur Schutzverglasung von Gebäuden, Fahrzeugen u.a., mehr jedoch eine bei relativ niedrigen Temperaturen eintretende Entmischung zu den unverträglichen Polymerkomponenten $P_1$ und $P_2$ voraus, d.h. eine niedrige LCST.

Das bedeutet, die Wechselwirkung der Polymeren sollte nicht so stark sein, dass die Entmischung zu den Polymerkomponenten $P_1$ und $P_2$ beispielsweise erst bei ca. 300°C erfolgt, wie es z.B. in dem Polymersystem PVDF/PMA der Fall ist. Für den erfindungsgemässen Einsatz von verträglichen Polymermischungen P sollte die Mischungsenthalpie der Polymeren $P_1$ und $P_2$ nur leicht negativ sein. Eine solche schwache Wechselwirkung — und damit auch eine niedrig liegende LCST — lässt sich z.T. mit einem grossen Anteil schwach wechselwirkender Gruppe/Polymermolekül oder aber mit einem geringen Anteil stärker wechselwirkender Gruppen erreichen. In der Regel ist ein hoher Anteil schwach wechselwirkender Gruppen (z.B. Dipol-Dipol-WW) bevorzugt.

Eine Möglichkeit, die Wechselwirkung Polymer 1/Polymer 2 zu erniedrigen, ist auch in dem Zusatz niedermolekularer Substanzen W (z.B. Lösungsmittel oder Weichmacher) zu sehen. Vorzugsweise ist wenigstens eines der beiden Polymerisate $P_1$ oder $P_2$ im Temperaturbereich von 0 bis 100°C nicht in Wasser löslich, insbesondere sollen nicht beide die Polymermischung P bildenden Polymerisate in Wasser löslich sein. (Die Löslichkeit der Polymeren in Lösungsmitteln ist meist als kooperativer Effekt zu beschreiben, d.h. es liegt eine Löslichkeit der Polymeren von wenigstens 50 Gramm pro Liter des Lösungsmittels L bei 22°C vor, oder es werden nur vernachlässigbar geringe Mengen gelöst. Der erstere Fall sei als «löslich im Lösungsmittel L» betrachtet.)

Die Polymermischung P ist aus mindestens zwei chemisch verschiedenen Polymeren $P_1$ und $P_2$ aufgebaut. Wenigstens eines der beiden Polymeren soll vorteilhafterweise einen Kohlenstoffgehalt von <80% aufweisen.

Weiter ist bevorzugt, dass wenigstens eines der beiden Polymere zu mindestens 5 Gew.-% (bezogen auf das Polymerisat $P_1$ und $P_2$) eine Gruppe mit einer vom Kohlenstoff ausgehenden Doppel- oder Dreifachbindung aufweist. Genannt seien z.B. die $-C=C-$ bzw. die $>C=O$, die $-C\equiv N$, $-C\equiv C-$, $>C=N-$, $>C=S$-Gruppe. Bevorzugt enthält wenigstens eines der Polymerisate $P_1$ oder $P_2$ kovalent gebundenes Halogen, insbesondere Fluor, Chlor oder Brom, vorteilhafterweise in Anteilen von > 10 Gew.-% und/oder Chalkogen, insbesondere Sauerstoff und/oder Schwefel, vorteilhaft in Anteilen von > 10 Gew.-%.

Zweckmässig beträgt das Verhältnis des Halogengehalts (in Gew.-%) des Polymeren $P_1$ zum Halogengehalt des Polymeren $P_2$ > 1,5:1, vorzugsweise > 2:1. Das Verhältnis des Sauerstoffgehalts des Polymeren $P_1$ zum Sauerstoffgehalt des Polymeren $P_2$ soll vorteihafterweise > 1,2:1, vorzugsweise > 1,5:1 betragen.

Weiter soll vorteilhafterweise wenigstens eines der die Polymermischung P bildenden Polymeren ein Copolymerisat sein, bei dem das als hauptsächlicher Bestandteil vorhandene Monomere höchstens 95 Gew.-% ausmacht.

Es ist ferner von Vorteil, wenn die Polymermischung P *unterhalb* der LCST, im gesamten Bereich von –30°C bis zur LCST selbst eine einzige Glastemperatur Tg aufweist und keine kristallinen Bereiche enthält.

Zweckmässigerweise sollten die Polymerkomponenten der Polymermischung P so aufgebaut sein, dass keines der Polymeren $P_1$ oder $P_2$ (bzw. weitere anwesenden Polymere) bei der Temperatur der LCST eine chemische Veränderung erfährt, die innerhalb einer Stunde mehr als 1% der Monomereinheiten erfasst.

Die Stabilität der Polymerkomponenten kann in an sich bekannter Weise durch Zusatz von UV-Schutzmitteln, Antioxidantien, Alterungs- bzw. Witterungsschutzmitteln u.ä. (vgl. Ullmanns Encyklopädie der Techn. Chemie. 4. Auflage. Bd. 15. Verlag Chemie, pp. 255 folg.) erhöht werden. Deren Anteil liegt im allgemeinen bei 0,01 bis 5 Gew.-%, vorzugsweise 0,1 bis 1 Gew.-%, bezogen auf die Polymermischung P. Genannt seien insbesondere sterisch gehinderte Phenole, Phosphite, Thioether, sterisch gehinderte Amine, Benzophenon, Benztriazol, Oxalanilide.

Im allgemeinen soll das (mittlere) Molekulargewicht der beiden Polymeren $P_1$ oder $P_2$ wenigstens

2000 betragen, vorzugsweise mindestens 10.000. (Die Bestimmung des Molekulargewichts wird in bekannter Weise durch Lichtstreuung vorgenommen. Zur Bestimmung des Molgewichts vgl. R. Vieweg, D. Braun, Kunststoff-Handbuch Bd. I, loc. cit. pp 342 ff.) Vorteilhaft weist wenigstens eines der Polymeren ein mittleres Molekulargewicht $\overline{M}_w$ im Bereich 2000 bis 500.000, vorzugsweise 10.000 bis 500.000 auf. Günstig ist es, wenn beide Polymere $P_1$ und $P_2$ mittlere Molekulargewichte im Bereich von 2000 bis 500.000, vorzugsweise 10.000 bis 500.000 aufweisen.

Besonders interessante Systeme liegen auch dann vor, wenn die beteiligten Polymerisate, beispielsweise $P_1$ mit $P_2$, zum Teil — im allgemeinen wenigstens zu 0,1% — kovalent verbunden sind. Solche kovalenten Verknüpfungen können beispielsweise durch den Charakter der Polymeren als Blockpolymere oder durch Pfropfung erreicht werden. Dabei sollen die einzelnen Blöcke — für sich betrachtet — ein Molekulargewicht von wenigstens 5000 besitzen.

Häufig ist es bereits ausreichend, das eine Polymerisat in Anwesenheit des anderen zu polymerisieren.

Die Durchführung der Block- bzw. der Pfropfpolymerisation kann in Anlehnung an die Verfahren des Standes det Technik durchgeführt werden. Bezüglich Einzelheiten der Herstellung von Block- und Pfropfcopolymerisaten sei auf die einschlägige Literatur verwiesen, z.B. Houben-Weyl, Methoden der Org. Chemie, 14/1, S. 110 ff.; Block Copolymers: D.C. Allport, W.H. Jansen, Appl. Sci. Publishers Ltd. London, 1973; Graft Copolymers: H.A.J. Battaerd, G.W. Tregear, Polymer Reviews, Vol. 16 (1967); Block und Graft Polymers. W.J. Burlant, A.S. Hoffmann, Reinhold Publishers Corp., New York, 1960.

Als Richtwerte für das Mischungsverhältnis im Polymersystem P können gelten: Ein Gewichtsverhältnis der Polymeren $P_1$ zu $P_2$ im Bereich 98:2 bis 2:98, vorzugsweise 90:10 bis 10:90, insbesondere 80:20 bis 20:80. Die Polymermischung P kann farblos sein, sie kann jedoch auch in einer für den angegebenen Verwendungszweck sinnvollen Weise eingefärbt sein. Sie kann ferner an sich bekannte UV-Absorbentien enthalten (vgl. Ullmanns Enzyklopädie loc. cit.).

Zum Einfärben wird vorzugsweise ein in dem Polymersystem löslicher Farbstoff der an sich bekannten Typen oder ein Pigmentfarbstoff mit diskreten Pigmentteilchen verwendet. Im letzteren Falle soll der Durchmesser der Pigmentteilchen zweckmässig höchstens 50% des im Durchschnitt auftretenden Durchmessers der bei der Entmischung der Polymeren $P_1$ und $P_2$ gebildeten Polymerphasendomänen ausmachen:

Farbstoffe und Pigmente der geeigneten Art können beispielsweise Ullmann's Encyclopädie, 4. Auflage, Band 15, loc. cit., S. 275 bis 280 (1978) entnommen werden.

Der Gehalt an Farbmitteln liegt in den üblichen Bereichen, beispielsweise zwischen 0,01 und 10 Gew.-%, bezogen auf die Polymermischung P.

Die Polymermischungen P können in verschiedenen Formen technisch angewendet werden.

Zunächst ist die Anwendung der Polymermischung P unmittelbar und ohne eine von der Polymermischung P unterscheidbare Trägergrundlage möglich. Für diese Art der Anwendung ist es günstig, wenn die Tg der Polymermischung P 30°C übersteigt.

Eine weitere Anwendungsform der Polymermischung P besteht darin, dass eine Trägergrundlage verwendet wird. In der Mehrzahl der Fälle wird die Polymermischung P haftend auf der Trägergrundlage aufgezogen sein. Auch eine doppelseitige Beschichtung einer Trägergrundlage ist möglich. Ein dritter, bevorzugter Fall liegt vor, wenn die Polymermischung P sich zwischen einer Trägerschicht und einer Deckschicht befindet. Dabei können die Träger- und die Deckschicht materiell oder/und geometrisch identisch sein. In der Regel wird die Trägergrundlage aus einem transparenten Material bestehen, ebenso die Deckschicht. Überwiegend werden Trägergrundlage und Deckschicht aus dem gleichen Material sein und die selben Abmessungen besitzen. Aus praktischen Erwägungen sollte das als Trägergrundlage verwendete Material eine Glastemperatur Tg von > 50°C, vorzugsweise > 90°C aufweisen. Werden weichere Materialien als Trägergrundlage verwendet, so sollten diese gummiartig vernetzt sein.

Die Temperaturbeständigkeit soll derart sein, dass sie nicht mit der thermischen Behandlung der Polymermischung P interferiert, d.h. sie wird in der Regel um mindestens 50°C höher sein als die LCST des Systems.

Als Trägergrundlage bietet sich transparentes anorganisches Material an, z.B. Mineralglas, wie Silikatglas. Weiter sind Kunststoffe brauchbar, sofern sie die vorstehend angegebenen Bedingungen erfüllen.

So können aus der Gruppe der Kunststoffe beispielsweise transparente Acrylharze, insbesondere auf Basis des Polymethylmethacrylats, gegebenenfalls durch Comonomere wie (Meth)Acrylnitril, Styrol, andere (Meth)acrylsäureester u.ä. modifizierte Acrylharze («Acrylglas») Verwendung finden.

Weiter sind Polycarbonat, Polyolefine, PVC, Polyamid, Polyester, Polyimide, Polystyrole, Polyurethan, Polyacetale, Polysulfone brauchbar.

Besonderes Interesse kann der Fall der zwischen Träger- und Deckschicht (die meistens nicht verschieden sind) eingebetteten Polymermischungen P beanspruchen.

Die geometrische Form der Polymermischungen P unterliegt im allgemeinen keinen materialspezifischen Limitierungen. Bei der Mitverwendung einer Trägergrundlage bzw. bei Einbettung wird die geometrische Gestalt, die die Polymermischungen annehmen, in der Regel durch die Form der Trägergrundlage und gegebenenfalls der Deckschicht bestimmt.

Die Polymermischung P wird, für sich, oder auf einer Trägergrundlage oder in Einbettung, beispielsweise in Form einer Platte, Scheibe oder Folie vorliegen. In Form einer Folie kann die Polymermischung P besonders leicht auf bereits bestehende Verglasungen, beispielsweise auf Mineralglasscheiben oder Kunststoffscheiben aufgebracht werden.

Auch das Aufbringen durch Tauchen, Giessen, Spritzen usw. aus einer geeigneten Form der Polymermischung $P_1$ wie der Flüssigform oder in weichgemachter oder gelöster Form, ist möglich. Besonders interessant ist die Verarbeitung durch Extrusion, insbesondere durch Coextrusion zusammen mit der Trägergrundlage und/oder der Deckschicht.

Die Trägergrundlage kann — wie bereits erwähnt — in zweckmässiger Weise eingefärbt sein. Sie kann dadurch z.B. die Funktion eines Filters für verschiedene Wellenlängen bzw. -bereiche des Lichts übernehmen.

Die Polymermischungen P können auch in einen (transparenten) Werkstoff eingelagert sein, dessen Brechungsindex mit dem Brechungsindex der Polymermischungen P unterhalb der LCST übereinstimmt. Vorteilhafterweise weist der zur Einlagerung verwendete Werkstoff eine Glastemperatur von > 50°C auf. Die zur Einlagerung geeigneten Werkstoffe können beispielsweise aus der Gruppe der oben genannten, als *Träger*grundlage geeigneten Polymeren ausgewählt sein. In vielen Fällen wird es genügen, die Polymermischungen P in einer Schichtdicke von < 1 mm, vorzugsweise 0,1 mm, speziell < 0,05 mm anzuwenden, wobei die Polymermischung P sich auf einer Trägergrundlage befinden oder eingelagert sein oder ohne Trägergrundlage angewendet werden kann. Besonders interessant ist der Fall einer Einlagerung zwischen der Polymermischung P in einen Werkstoff, dessen Brechungsindex mit dem Brechungsindex der Polymermischung unterhalb der LCST übereinstimmt und der somit eine Matrix M bildet.

Besonders interssant sind solche Verglasungssysteme, bei denen die Polymermischung P in einen als Matrix dienenden Werkstoff M in Form diskreter Teilchen von einem Durchmesser im Bereich 20 nm bis 200 μm, bevorzugt 50 nm bis 500 μm eingelagert ist.

Besonders bevorzugt sind dabei Teilchen mit einem Durchmesser im Bereich von 50 nm bis 5 μm. Dabei ist es möglich, diese feinen Teilchen durch Emulsionspolymerisation wenigstens eines der Polymerkomponenten $P_1$ oder $P_2$ herzustellen. Von besonderem Interesse ist die Herstellung der Polymerkomponenten $P_1$ und $P_2$ der Polymermischung P in einem wenigstens zwei Stufen umfassenden Emulsionspolymerisationsverfahren. Besonders bevorzugt wird dabei so verfahren, dass ein weitgehend aus der Polymerkomponente $P_1$ aufgebauter Latex als Saatlatex für die Emulsionspolymerisation der Polymerkomponente $P_2$ dient. Weiter kann es von Vorteil sein, den genannten, die Polymerkomponente $P_1$ und/oder $P_2$ enthaltenden Latex als Saatlatex für die Emulsionspolymerisation einer Polymerkomponente PM zu verwenden, wobei unter PM ein Polymerisat zu verstehen ist, das mit der Matrix M verträglich ist oder besonders bevorzugt chemisch mit der Matrix M übereinstimmt. Dieser Anteil PM dient der Verankerung des Polymerisats P in der Matrix M. In der Regel wird die Matrix M mit keiner die Polymermischung P aufbauenden Polymerkomponenten $P_1$ und $P_2$ eine verträgliche Polymermischung eingehen.

Weiter gilt in der Regel bei Einlagerung der Polymermischung P in Teilchenform in eine Matrix M, dass die Polymermischung P unterhalb der LCST in Bezug auf ihren Brechungsindex mit der Matrix M

weitgehend übereinstimmt ($\Delta n$ in der Regel < 0,01). Darüber hinaus gilt im allgemeinen $n_{D\ Matrix} > n_{D\ Polymerisat\ 1}$ ($\Delta n > 0,01$) in Verbindung mit $n_{D\ Matrix} < n_{D\ Polymerisat\ 2}$ ($\Delta n > 0,01$).

Die (minimale) Schichtdicke der Polymermischungen P als solche und in den verschiedenen, angewendeten geometrischen Konfigurationen wird einerseits durch die zu fordernde Kohärenz der Schicht, andererseits durch den zu fordernden Unterschied in der Transmission oberhalb und unterhalb der LCST determiniert. Als Richtwert kann für die Schichtdicke ein Wert von 10 μm bis 1 mm gelten.

*Die Polymeren $P_1$ und $P_2$*

Auszugehen ist zunächst von den von der Technik zur Verfügung gestellten Polymermischungen, die LCST zeigen (vgl. Aufgabe und Lösung). Als zusätzliches Auswahlkriterium kann gelten, dass der LCST der Polymermischungen P unterhalb 150°C, vorzugsweise unterhalb 100°C, speziell unterhalb 50°C liegen soll. Manche Systeme bedürfen jedoch, um erfindungsgemäss als Verglasungselemente, beispielsweise von Schutzverglasungen, eingesetzt werden zu können, der Modifikation durch Variation mindestens eines der Parameter a), b), c) oder d); siehe unten.

Zu den Polymermischungen die LCST zeigen, gehören die bekannten Polymerisate P, gebildet aus Polyethylmethacrylat/Polyvinylidenfluorid (LCST = 240°C), PMMA/Styrol-Acrylnitril-Copolymere (LCST = 179°C), die aufgrund ihrer hohen LCST als weniger geeignet erscheinen. Technisch interessant ist das System Polystyrol/Polyvinylmethylether mit einem Trübungspunkt von ca. 120°C (M. Bank et al. Macromolecules 4, 43 (1971), J. Polym. Sci., Polym. Phys. Ed. 10, 1097 (1972), T. Nishi et al., Polymer 16, 285 (1975), T.K. Kwei et al., Macromolecules 7, 667 (1974), das im folgenden mit $P_1$-I/$P_2$-I bezeichnet wird. Weiter sind von besonderem Interesse die bekannten Polymermischungen P aus carbonylgruppenhaltigen Polymeren $P_1$ und halogenhaltigen Polymeren $P_2$, insbesondere Polymermischungen aus Estergruppen enthaltenden Polymeren $P_1$ und chlorhaltigen Polymeren $P_2$, so z.B. die Polymermischung aus Ethylen-Vinylacetat-Copolymeren (im folgenden $P_1$-II genannt) und chloriertem Polyethylen (im folgenden $P_2$-II genannt) sowie das Polymersystem P, bestehend aus Butylacrylat/chloriertem Polyethylen, im folgenden $P_1$-III/$P_2$-II genannt, ferner das System PMMA/chloriertes Polyethylen, im folgenden $P_1$-IV/$P_2$-II genannt.

Darüber hinaus sind die Systeme Poly-n-Hexylmethacrylat/PVC, Poly-n-butylacrylat/PVC, Poly-n-propylacrylat/PVC zu nennen.

Das System Estergruppen enthaltende Polymere als $P_1$ und Chlor enthaltende Polymere als $P_2$ kann dabei erheblich variiert werden. Voraussetzung ist dabei, dass der Chloranteil im Polymeren $P_2$ genügend hoch ist (in der Regel im Bereich von 25 bis 75 Gew.-%) und dass eine ausreichende Anzahl von Carbonylgruppen als Wechselwirkungspartner im Polymeren $P_1$ zur Verfügung steht. (Gewichtsanteil der Carbonylgruppe ($>$C $=$ O) in der Regel im Bereich 10-35%.)

Als Beispiel für die weite Variationsmöglichkeit des Systems Estercarbonylgruppe im Polymer 1/chlorhaltiges Polymer 2, seien die folgenden, bisher nicht bekannten Systeme auf Basis Poly(meth)acrylat/Chlorkautschuk genannt:

Copolymere aus Isobutylmethacrylat und 2-Ethylhexylmethacrylat (im folgenden $P_1$-V genannt) und Chlorkautschuk (im folgenden $P_2$-III genannt) sowie Copolymere aus Methylmethacrylat und Ethylacrylat (im folgenden als $P_1$-VI bezeichnet) und Chlorkautschuk (im folgenden als $P_2$-III bezeichnet).

Die genaue Lage des Trübungspunktes (LCST) lässt sich erfahrungsgemäss im allgemeinen durch die Variation eines oder mehrerer der folgenden Parameter in gewissen Grenzen beeinflussen:

a) Durch Veränderung der Anteile der wechselwirkenden Gruppen in den Polymeren $P_1$ und $P_2$; dies kann durch Copolymerisation mit anderen Monomeren oder aber durch Variation der Monomerbausteine innerhalb einer homologen Reihe geschehen. So wird z.B. in der Reihe Polymethylmethacrylat, Polyethylmethacrylat, Polybutylmethacrylat der Anteil der Estergruppen im Polymeren geringer.

Dabei gilt im allgemeinen, dass die LCST sinkt, wenn der Anteil der wechselwirkenden Gruppen geringer wird oder umgekehrt, Polymere mit einer höheren Konzentration an funktionellen Gruppen (z.B. Chloranteil im Polymeren $P_2$ und Estergruppen im Polymeren $P_1$) zeigen die höhere LCST (vgl. D.J. Walsh et al., Macromolecules 16, 388-391, 1983).

b) Durch Veränderung der Anteile von $P_1$ bzw. $P_2$ (vgl. Abbildung 1) und gegebenenfalls einem weiteren Polymeren $P_3$ an der Polymermischung P.

c) Durch Zusatz einer oder mehrerer niedermolekularer Substanzen W als Weichmacher und/oder Lösungsmittel. In der Regel wird durch den Zusatz von niedermolekularen Substanzen W — vor allem, wenn nur geringe Mengen, z.B. 10 Gew.-%, bezogen auf die Polymermischung P, eingesetzt werden, die LCST gesenkt. Vor allem wird durch den Zusatz von Weichmachern die Beweglichkeit des Systems P erhöht (vgl. R.E. Bernstein et al., Macromolecules 10, 681 bis 686, 1977).

d) Durch Veränderung des Molekulargewichts der Polymeren $P_1$ und $P_2$. Im allgemeinen wird die LCST mit zunehmendem Molekulargewicht niedriger (J.H. Halary et al.. Polymer, 25, 956-962, 1984). Das Molekulargewicht sollte jedoch nicht zu hoch gewählt werden, z.B. vorzugsweise $< 10^6$, oder besonders bevorzugt $\leqslant$ 500.000, da bei höheren Molekulargewichten kinetische Effekte eine übergeordnete Rolle spielen (vgl. D.J. Walsh, Zhikuan Chai, Macromol. Chem. 184, 1459-1468, 1983).

Dadurch entsteht eine gewisse Variabilität in der Wahl der Schwellentemperatur, bei der die Trübung der Verglasungseinheiten eintritt.

Ganz allgemein bevorzugt sind solche Polymermischungen P, die nur geringe oder vorzugsweise keine kristallinen Anteile enthalten und die wenigstens eine durch radikalische Polymerisation zugängliche Polymerkomponente enthalten. Von besonderem Interesse sind dabei Acryl- und Methacrylsäureester enthaltende Polymere, da hier durch Variation der Alkoholkomponente des Esters und bei Copolymeren durch Variation der Anteile der einzelnen Copolymeren die Wechselwirkung des Polymeren $P_1$ mit dem Polymeren $P_2$ gut abgestuft werden kann. Darüber hinaus ist es bei Acrylsäure- und Methacrylsäureester enthaltenden Copolymeren relativ einfach möglich durch Copolymerisation relativ «weicher» Comonomeren die Glastemperatur des Polymeren zu erniedrigen. Unter relativ weichen Comonomeren seien solche verstanden, deren Homopolymerisate eine dynamische Einfriertemperatur (nach DIN 7724) von weniger als 50°C besitzen. (Zu den Daten vgl. Brandrup-Immergut, Polymer Handbook loc. cit.)

Ebenfalls von Interesse als Polymerkomponente zur Herstellung von Polymermischungen P mit temperaturgesteuerter Eintrübung sind solche Polymere und Copolymere $P_1$ (bzw. $P_2$), die Styrol oder ein Homologes des Styrols enthalten, wobei als Polymerkomponente $P_2$ (bzw. $P_1$) Polyvinylether bevorzugt sind. Darüber hinaus geeignet sind als Komponente $P_1$ (bzw. $P_2$) Ethylen-Vinylester-Copolymere und als $P_2$ (bzw. $P_1$), vorzugsweise polymere halogenierte Kohlenwasserstoffe, wie beispielsweise chloriertes Polyethylen.

Polymermischungen, die den Auswahlkriterien von P genügen, können in systematischer Weise aufgefunden werden, wobei jeweils die eine Komponente, beispielsweise $P_1$ festgehalten wird und $P_2$ variiert wird. [Vgl. J.S. Higgins, D.J. Walsh in Polym. Engineering & Science 24, (8), 555-562 (1984)]. Man kann dabei z.B. so vorgehen, dass der Polymerkomponente $P_1$ in einem geeigneten Lösungsmittel wie z.B. Toluol gelöst, Lösungen der Polymerkomponente $P_2$ in verschiedenen Mengenverhältnissen relativ zueinander zugemischt werden. Es wird dann ein Film ausgezogen und dieser Film einmal bei Raumtemperatur und dann bei erhöhter Temperatur (beispielsweise 100°C, 140°C) visuell beurteilt. Polymerunverträglichkeit zeigt sich häufig bereits beim Mischen der Polymerlösungen im Reagenzglas durch Trübung an. Dabei ist die Auswahl des Lösungsmittels wichtig; so sollte eine grosse Asymmetrie in der Polymer-Lösungsmittel-Wechselwirkung vermieden werden!

Eine andere Möglichkeit ist im Mischen der Polymeren in der Schmelze zu sehen. Dabei ist jedoch in der Regel unterhalb LCST zu arbeiten, da ein Mischversuch oberhalb LCST stets zwei Phasen ergeben wird.

Eine einfache Mischung der Polymeren kann auch dadurch erzielt werden, dass man eine homogene Lösung der Polymeren $P_1$ und $P_2$ in einem Lösungsmittel herstellt und diese, beide Polymerarten $P_1$ und $P_2$ enthaltende Lösung in einem Nicht-Lösungsmittel ausfällt.

Eine weitere Möglichkeit ist in der Polymerisation der Monomeren eines Polymeren z.B. $P_1$ in Gegenwart des Polymeren $P_2$ zu sehen. Man kann also die das Polymere $P_1$ aufbauenden Monomeren als Lösungsmittel für $P_2$ verwenden. Aber auch hier ist bei bestimmten Zusammensetzungen mit Phasentrennung zu rechnen, so dass u.U. die Polymerisation zu Polymer 1 in mehreren Etappen durchgeführt werden muss. Vergleiche auch J.S. Higgins and D.J. Walsh, Polymer Engineering and Science, 24, 555 (1984).

*Zur Konfiguration der Polymermischungen P/Herstellung der Verglasungen.*

Die gegebenenfalls die niedermolekulare Substanz W in Form eines Weichmachers und/oder eines Lösungsmittels enthaltende Polymermischung P kann als solche auf einen Träger aufgebracht werden. Die Polymermischung P, gegebenenfalls in Form eines, die niedermolekulare Substanz W enthaltenden Gemisches, kann zum Verkleben von Trägergrundlage und Deckschicht (die in der Regel materiell identisch sind) verwendet werden. Die Einbettung zwischen Träger- und Deckschicht kann auch nach Art eines Monomer/Polymer (Mopo-)Systems erfolgen. Als Träger und Deckschicht problemlos ist ein anorganisches Glas, da dieses weder für die Polymerkomponenten $P_1$ und $P_2$ noch für eventuell vorhandene niedermolekulare Substanzen (Lösungmittel, Weichmacher) durchlässig ist. Verwendet man dagegen als Träger- und/oder als Deckschicht ein Kunststoffmaterial, so ist darauf zu achten, dass dieses Material nicht im Laufe der Zeit das Polymersystem P verändert. So ist es z.B. nicht vorteilhaft, als Träger- und/oder Deckschicht ein Polymeres zu verwenden, das von dem — gegebenenfalls im Polymersystem P enthaltenden — Weichmacher angegriffen wird. Auch wird man das als Träger- oder Deckschicht verwendete Material in der Regel nicht aus einer Reihe von Polymeren wählen, die mit beiden oder einer der beiden Polymerkomponenten $P_1$ oder $P_2$ ebenfalls eine kompatible Polymermischung ergibt. Die genannte Wechselwirkung Träger- oder Deckschicht/Polymersystem $P_1,P_2$/Weichmacher könnte eine zeitliche Veränderung der LCST hervorrufen oder das System in anderer Weise stören.

Die Polymermischung P kann auch durch Co-Fällung dargestellt werden und als solche auf die Trägergrundlage aufgebracht, insbesondere aufgepresst werden.

Zur Be- bzw. Verarbeitung der Polymermischung P sind die verschiedenen Verfahren der Kunststoffindustrie geeignet, wobei die jeweils aktuellen, physikalisch-chemischen Daten der Polymermischung P wie ihre Tg, LCST, Wärmebeständigkeit usw. berücksichtigt werden.

So kann die Polymermischung P beispielsweise durch Spritzgiessen erzeugt oder bearbeitet werden.

In anderen Fällen kann die Polymermischung P durch Extrusion erzeugt und/oder bearbeitet, beispielsweise auf eine Trägergrundlage aufgebracht werden. Von besonderem Interesse ist die Coextrusion, beispielsweise zusammen mit der Träger- und/oder der Deckschicht.

In beiden Fällen ist es vorteilhaft, wenn die Polymermischung P bei einer Temperatur unterhalb LCST erzeugt wird.

Als Trägergrundlage auf Kunststoffbasis kommen die transparenten Kunststoffe, wie Acrylharze, Polyolefine, Polyvinylchlorid, Polyamid, Polyester, Polyurethan, Polyimide, Polysulfone, Polyacetale, Polystyrole in Frage.

Die Durchführung der Koextrusion kann in an sich bekannter Weise, beispielsweise unter Verwendung einer Mehrmaterialdüse erfolgen.

(D. Djordjevic in «Die neue Verpackung» Heft 7, pp 1041 ff. (1978); J.E. Johnson, in «Der Kunststoffberater» 10, pp 538 bis 541, 1976.) Bei der Extrusion und der Koextrusion der Polymermischungen P kann in vollem Umfang auf die Erfahrungen des Standes der Technik zurückgegriffen werden (vgl. Kirk-Othmer, 3. Auflage. Vol. 18. pp. 185-190.)

*Vorteilhafte Wirkungen*

Die erfindungsgemässen Verglasungen mit temperaturgesteuerter Lichtdurchlässigkeit eignen sich für alle Arten von Schutzverglasungen, für Räume und sonstige Funktionseinheiten, wie Teile von Gebäuden oder von Fahrzeugen in Form von Dächern, Wänden, Fenstern, Türen und Vorrichtungen oder Teilen derselben.

Genannt seien z.B. Verwendung im Gewächshausbau und in Stallungen, bei Sportstätten wie Schwimmhallen, Turnhallen und sonstigen glasverkleideten oder -gedeckten Gebäuden und Gebäudeteilen wie Wintergärten, Vorbauten, Eingangshallen, Treppenhäuser, Telefonzellen, bei Oberlichtern, Dächern von Kranen, Baumaschinen, Traktoren, Bussen, Booten, Schiffen, bei Behältern wie Vitrinen, Schaukästen, Diakästen, daneben als Überhitzungsschutz z.B. von Sonnenkollektoren u.a.

Die Temperatur, bei der das System sich eintrübt, d.h. die LCST lässt sich entsprechend den unterschiedlichen Anforderungen frei wählen.

Wie bereits erwähnt, können Polymermischungen, welche die von den erfindungsgemässen Systemen P zu fordernden Bedingungen erfüllen, in gezieltem, systematischem Vorgehen aufgefunden werden.

Das Vorgehen sei anhand des folgenden Beispiels unter Verwendung von Chlorkautschuk erläutert.

*Beispiel 1:*

Gezielte Entwicklung einer Polymermischung P.

Chlorkautschuk (67 Gew.-% Chlor) wird in Toluol gelöst, diese Lösung wird im Verhältnis 1:1 mit Lösungen verschiedener Polymethacrylsäureester gemischt, es wird ein Film ausgezogen und dieser Film bei Raumtemperatur und bei erhöhter Temperatur (z.B. 140°C) beobachtet. Oft ist es dabei gar nicht erforderlich, einen Film auszugiessen, zumal sich eine Polymerunverträglichkeit häufig bereits beim Mischen der Polymerlösungen im Reagenzglas durch Trübung anzeigt.

| Polymermischung | Beurteilung des Films bei | |
| --- | --- | --- |
| | Raum- temperatur | 140°C |
| Chlorkautschuk*/Poly- methylmethacrylat** | klar | klar |
| Chlorkautschuk*/Co- polymerisat Methylmethacrylat- Butylmethacrylat (20:80)*** | klar | klar |

| Polymermischung | Beurteilung des Films bei | |
|---|---|---|
| | Raum-temperatur | 140°C |
| Chlorkautschuk*/Poly-isobutyl-methacrylat**** | klar | teilw.trüb |
| Chlorkautschuk*/Poly--2-Ethylhexylmeth-acrylat***** | trüb | trüb |

$**\overline{M}$ = ca. 100.000 (Produkt PLEXIGUM M 910® der Röhm GmbH)

$***\overline{M}$ = ca. 100.000 (Produkt PLEXIGUM P24® der Röhm GmbH)

$****\overline{M}$ = ca. 100.000 (Produkt PLEXIGUM P26® der Röhm GnbH)

$*\overline{M}$ = 85.000 (Viskosität nach DIN 53015: 8,5 - 10 mPa·s (Chlorgehalt: ca. 67 Gew.-%) Produkt PERGUT S10® der Bayer AG)

$*****\overline{M}$ = Hergestellt durch Lösungspolymerisation von 2-Ethylhexylmethacrylat in Toluol (Initiator: Dilauroylperoxid, Polymerisationstemperatur: 70°C)

Schlussfolgerung: Die gute Verträglichkeit des Chlorkautschuks mit polymeren Estern der Methacrylsäure wird mit zunehmender Lipophilie der Ester geringer.

Durch Copolymerisation des als Homopolymer mit Chlorkautschuk unverträglichen 2-Ethylhexylmethacrylats mit dem besser verträglichen iso-Butylmethacrylat lassen sich z.B. Polymermischungen mit einer unteren kritischen Lösungstemperatur (LCST) von beispielsweise ca. 100°C herstellen.

Die Polymermischung Chlorkautschuk/Copolymerisat 2-Ethylhexylmethacrylat-iso-Butylmethacrylat entspricht den Anforderungen an das Polymersystem P. Die exakte Lage der LCST lässt sich innerhalb gewisser Grenzen durch das Mischungsverhältnis und/oder den Zusatz von Weichmachern oder Lösungsmittel verändern.

*Beispiel 2*

Glasplattenverbund mit temperaturgesteuerter Lichtdurchlässigkeit mit der Polymermischung P₁-V/P₂-III.

50 g Chlorkautschuk (PERGUT® der Fa. Bayer AG) werden in 200 g Toluol gelöst. Nach Zusatz von 100 g Isobutylmethacrylat, 100 g 2-Ethylhexylmethacrylat und 2 g Dilaurylperoxid wird bei 70°C polymerisiert. Anschliessend wird noch 1 h bei 80°C nacherhitzt.

Es resultiert eine bei 70°C weisse Lösung. Abkühlung auf Raumtemperatur führt zu einer hochviskosen, klaren, gelblichen Lösung. Mit wenigen Tropfen dieser Polymerlösung werden 2 Glasplatten (Dicke jeweils ca. 0,5 mm) miteinander verklebt. Es resultiert ein glasklares System, das beim Erwärmen über die LCST (ca. 60°C) plötzlich trüb wird. Dieser Übergang ist völlig reversibel.

Tabelle 2 zeigt die Lichtdurchlässigkeit der so hergestellten Polymermischung P bei Raumtemperatur und bei 70°C.

TABELLE 2

Lichtdurchlässigkeit
im System Glas/Polymermischung P/Glas

| Lichtwellenlänge (nm) | Lichtdurchlässigkeit (%) | |
|---|---|---|
| | bei Raum-temperatur | bei 70°C |
| 380 | 90 | 20 |
| 530 | 91 | 40 |
| 750 | 92 | 50 |

Dieser Vorgang: Erwärmung in den lichtsteuernden Zweiphasenbereich und Abkühlen in den klaren, einphasigen Bereich wurde 40mal wiederholt ohne dass eine Änderung am System zu beobachten war.

Wie das System Chlorkautschuk/Copolymer aus Isobutylmethacrylat-2-Ethylhexylmethacrylat zeigt auch das System: Copolymer aus Methylmethacrylat und Ethylacrylat (3:2)/Chlorkautschuk eine LCST.

*Beispiel 3*

50 g Chlorkautschuk (PERGUT S10® der Bayer AG) werden in 200 g Toluol gelöst. Es werden 120 g Methylmethacrylat, 80 g Ethylacrylat und 2 g Dilauroylperoxid zugesetzt. Anschliessend wurde bei 70°C polymerisiert. Es wurden weitere 200 g Toluol zugesetzt. Nach Reaktionsende wurde noch 2 h bei 70°C gehalten. Nach dem Abkühlen wurde eine viskose, klare, hellgelbe Lösung erhalten (= Lösung 3A).

Lösung 3A aus Versuch 3 wird mit 40 Gew.-% Benzyl-butyl-phthalat (bezogen auf den Polymeranteil) versetzt und auf eine Glasplatte aufgezogen und getrocknet.

Es resultiert ein glasklarer Polymerfilm mit einem Trübungspunkt von 80°C.

*Beispiel 4*

Eine veträgliche Polymermischung P (bestehend aus 30 Gew.-% Polystyrol ($\overline{M}_w$: ca. 100.000) und 70 Gew.-% Polyvinylmethylester ($\overline{M}_w$: ca. 50.000) wird durch Auflösen der Polymeren in Toluol hergestellt. Die Lösung wird auf eine 3 mm dicke, 500 mm breite und 1000 mm lange Glasscheibe so aufgezogen, dass nach dem Abdampfen des Toluols eine ca. 100 µm dicke Schicht der Polymermischungen P auf dem Glas verbleibt.

Es resultiert eine Schutzverglasung, die im Bereich Raumtemperatur bei ca. 100°C völlig klar ist. Erwärmt man die Schutzscheibe jedoch über 100°C so wird die Scheibe weiss. Beim Abkühlen auf Temperaturen unter 100°C wird die Scheibe wieder völlig klar. Erneutes Erwärmen auf Temperaturen über 100°C führt wieder zur Eintrübung usw. Der Vorgang ist demnach reversibel.

*Beispiel 5*

Gezielte Entwicklung einer Polymermischung P.

Einsatz von Polymeren P₁ und P₂ mit niedriger Glastemperatur zur Synthese eines schnell reversibel entmischenden Systems.

Poly-2-Ethylenhexylacrylat zeigt einen Brechungsindex von ca. 1,48 ($n_D^{20}$), die Glastemperatur beträgt: −55°C.

Copolymere aus 70 Gew.-% Tetradecylmethacrylat (Methacrylsäureester eines Alkoholgemisches aus C₁₂ bis C₁₈-Alkoholen; mittlere Kohlenstoffzahl des Alkohols ist 14: Siehe auch folgende Beispiele) und 30 Gew.-% Styrol.

Brechungsindex $n_D^{20}$ = 1,51. Glastemperatur < Raumtemperatur. Poly-2-Ethylhexylacrylat und das Copolymere aus 70% Tetradecylmethacrylat und 30% Styrol sind nicht miteinander verträglich.

Eine Mischbarkeit lässt sich aber erreichen, wenn das eine Polymere mit einer polymerisierbaren Säure copolymerisiert, das andere Polymere mit einer polymerisierbaren Base copolymerisiert wird. (Das heisst: durch Einführung von Gruppen komplementärer Unähnlichkeit in die beiden Polymeren lässt sich eine Verträglichkeit erzeugen.)

Dabei wird mit zunehmendem Anteil an Säure bzw. Base in den Polymeren die Verträglichkeit besser, d.h. die LCST steigt. Wie im folgenden gezeigt wird, kann demzufolge die LCST über den Anteil von Säure bzw. Amin in den Polymeren beliebig eingestellt werden.

*Durchführung:*

*Synthese des Polymeren P₂-XI*

Eine Mischung aus

| 75 | g | 3-Dimethylamino-2,2-dimethyl-propyl-1-methacrylat (15 Gew.-%) |
| 297,5 | g | Tetradecylmethacrylat (59,5 Gew.-%) |
| 127,5 | g | Styrol (25,5 Gew.-%) |

wird unter Zusatz von 1,5 g t-Dodecylmercaptan als Regler und 1 g AIBN Azo-iso-buttersäure nitril als Initiator direkt in Substanz polymerisiert. Reaktionsbedingungen:
24 Stunden bei 55°C und anschliessend
24 Stunden bei 60°C.
Man erhält eine weiche, klare, schwach gelb gefärbte Polymerisatmasse, $\eta_{spec}$/C = 63 ml/g.

*Synthese des Polymeren P₂-XII*

Man wiederholt die Polymerisation wie für das Polymere P₂-XI beschrieben, wählt jedoch eine andere Polymerisatzusammensetzung:

| 10 Gew.-% | 3-Dimethylamino-2,2-dimethyl-propyl-1-methacrylat |
| 63 Gew.-% | Tetradecylmethacrylat |
| 27 Gew.-% | Styrol |

Man erhält ebenfalls eine weiche, klare, schwach gelb gefärbte Polymerisatmasse. $\eta_{spec}$/C = 56 ml/g.

*Synthese des Polymeren P₂-XIII*

Man wiederholt die Polymerisation wie für das Polymere P₂-XI beschrieben, wählt jedoch eine andere Polymerisatzusammensetzung:

| 6 Gew.-% | 3-Dimethylamino-2,2-dimethyl-propyl-1-methacrylat |
| 65,8 Gew.-% | Tetradecylmethacrylat |
| 28,2 Gew.-% | Styrol |

Man erhält ebenfalls eine weiche, klare, schwach gelb gefärbte Polymerisatmasse. $\eta_{spec}$/C = 48 ml/g.

*Synthese des Polymeren P₁-XI*

In eine Vorlage aus 500 g Toluol und 1,25 g t-Butyl-2-ethylhexanoat lässt man unter Argon bei einer Temperatur von 80°C innerhalb von 4 Stunden eine Mischung aus

| 1,25 | g | tert. Butyl-per-2-Ethylhexanoat |
| 0,75 | g | Dodecylmercaptan |
| 25 | g | Acrylsäure und |
| 475 | g | 2-Ethylhexylacrylat tropfen. |

Anschliessend wird noch 4 Stunden bei 80°C gerührt. Es resultiert eine ca. 50%ige Polymerlösung, $\eta_{spec}$/C = 18 ml/g.

*Synthese von Polymermischung mit LCST durch Abmischen von P₁-XI mit P₂-XI*

Aus der ca. 50%igen Polymerlösung P₁-XI in Toluol, und dem Polymerisat P₂-XI wird eine ca. 20%ige Polymerlösung in Toluol hergestellt. Diese Polymerlösung wird auf eine 0,2 mm dicke Glasplatte aufgezogen und getrocknet. Es resultiert ein klarer Polymerisatfilm, der beim Erwärmen über die LCST trüb wird. Die Lage der LCST hängt von dem Verhältnis P₁-XI zu P₂-XI ab. Beim Abkühlen unter die LCST wird die Polymerisatmischung innerhalb weniger Sekunden wieder klar, d.h. der Entwicklungsvorgang ist reversibel.

TABELLE 1

Lage der LCST als Funktion des Mischungsverhältnisses P₁-XI / P₂-XI

| Anteil der Polymeren an der Mischung P: Gew.-% | | LCST (°C) |
|---|---|---|
| Gew.-% P₁-XI | Gew.-% P₂-XI | |
| 10 | 90 | 170 |
| 30 | 70 | 130 |
| 50 | 50 | 120 |
| 70 | 30 | 110 |
| 90 | 10 | 120 |

In Analogie zur Synthese der Polymermischung P auf Basis P₁-XI / P₂-XI werden durch Abmischung von 50 Gew.-% P₁-XI und 50 Gew.-% P₂-XII bzw. 50 Gew.-% P₂-XIII weitere Polymermischungen erzeugt.

| Polymermischung P₁-XI / P₂-XII | LCST: 75°C |
| Polymermischung P₁-XI / P₂-XIII | LCST: 54°C |

*Beispiel 6*

Die Polymermischung P bestehend aus 50 Gew.-% P₁-XI und 50 Gew.-% P₂-XIII wird in eine Matrix aus Polymethylmethacrylat eingelagert.

| Grundplatte: | Polymethylmethacrylat, Dicke 2 mm. |
| Zwischenschicht: | Lochplatte aus Polymethylmethacrylat, Dicke 0,8 mm. (Gitterplatte mit einem Gitterabstand von 6 mm, Stegdicke 1 mm). |
| Deckschicht: | Polymethylmethacrylat, Dicke 2 mm. |

Jedes Gitterelement (5 mm × 5 mm × 0,8 mm) enthält die Polymermischung P bestehend aus 50 Gew.-% $P_1$-XI und 50 Gew.-% $P_2$-XIII.

Diese Mehrschichtplatte ist im Temperaturbereich bis 45°C völlig klar, beim Erwärmen auf 60°C wird die Platte jedoch im Bereich der Gitterelemente trüb, wodurch die Lichtdurchlässigkeit reduziert wird.

Beim Abkühlen auf Temperaturen unter 50°C wird die Platte wieder völlig klar.

*Beispiel 7*

Polybutylacrylat (Tg = −45°C) und Poly--3-Phenylpropylacrylat sind in nicht modifizierter Form miteinander nicht verträglich. Durch Einbau von Gruppen komplementärer Unähnlichkeit (Säure in einem Polymeren, Base im anderen) kann jedoch eine verträgliche Polymermischung erzeugt werden. Wie im Beispiel 5 gezeigt wurde, kann auch hier die LCST über den Anteil von Säure bzw. Amin in dem Polymeren eingestellt werden.

Das Polymere $P_1$-XII (Copolymeres aus 97% Butylacrylat und 3% Acrylsäure) zeigt einen Brechungsindex $n_D^{20}$ = 1,47.

Das Polymere $P_2$-XIV (Copolymere aus 96% 3-Phenyl-propyl-1-arylat und 4% 3-Dimethylamino--2,2-dimethyl-propyl-1-methacrylat) zeigt einen Brechungsindex $n_D^{20}$ = 1,56.

Die im folgenden beschriebene Herstellung und Handhabung der Polymermischung als Dispersion ist besonders im Falle einer sehr niedrigen LCST von Vorteil.

*Durchführung:*

In einem Polymerisationsgefäss werden

| 60 | g | 1-Propanol |
| 1,8 | g | Acrylsäure |
| 0,03 | g | Dodecylmercaptan |
| 58,2 | g | Acrylsäurebutylester |
| 0,12 | g | t-Butylperoxyneodecanoat |

in 3 Stunden polymerisiert (Badtemperatur: 50°C).
Man erhält eine klare Polymerlösung ($\eta_{spec}$/C = 53 ml/g). (= $P_1$-XII).

Anschliessend setzt man

| 60 | g | 1-Propanol |
| 1,3 | g | 3-Dimethylamino-2,2-dimethyl-propyl-1-methacrylat |
| 31,2 | g | 3-Phenylpropyl-1-acrylat und |
| 0,03 | g | t-Butylperoxyneodecanoat zu (= $P_2$-XIV) |

und polymerisiert 3 Stunden bei 50°C unter Argon.
Man erhält eine viskose, weisse Polymerdispersion, die nach dem Trocknen bei Raumtemperatur einen klaren Film ergibt. Ein auf eine Glasplatte aufgezogener Film, der im Bereich von Raumtemperatur bis ca. 65°C völlig klar ist, wird beim Erwärmen über die LCST: 80°C deutlich trüb.

*Beispiel 8*

Polymermischung $P_1$-XIII / $P_2$-XV

Man verfährt wie in Beispiel 7, verwendet jedoch weniger wechselwirkende Gruppen. Dadurch wird die LCST gesenkt.

In einem Polymerisationsgefäss werden

| 60 | g | 1-Propanol |
| 1,5 | g | Acrylsäure |
| 0,03 | g | Dodecylmercaptan |
| 58,5 | g | Acrylsäurebutylester |
| 0,12 | g | t-Butylperoxyneodecanoat |

in 3 Stunden polymerisiert (Schutzgas: Argon, Badtemperatur 50°C). Man erhält eine klare Polymerlösung ($\eta_{spec}$/C = 56 ml/g) (= $P_1$-XIII).

Anschliessend setzt man

| 60 | g | 1-Propanol |
| 1,138 | g | 3-Dimethylamino-2,2-dimethyl-propyl--1-methacrylat |
| 31,36 | g | 3-Phenylpropyl-1-acrylat und |
| 0,03 | g | t-Butylperoxyneodecanoat zu (= $P_2$-XV) |

und polymerisiert 3 Stunden bei 50°C.

Man erhält eine weitere, weisse Polymerdispersion, die nach dem Trocknen einen klaren Film ergibt. LCST: ca. 30°C.

Auf eine 2 mm dicke Platte aus Polymethylmethacrylat wird eine ca. 200 μm dicke Schicht der Polymermischung $P_1$-XIII / $P_2$-XV aufgebracht. Nach Abdecken mit einer 100 μm dicken Polymermethylacrylatfolie wird erneut eine ca. 200 μm dicke Schicht der Polymermischung $P_1$-XIII / $P_2$-XV aufgebracht. Die Abdeckung dieser Schicht erfolgt mit einer 1 mm dicken Polymethylmethacrylatplatte.

Alle Arbeiten (Reinigung der Polymethacrylatplatte, Filtration und Auftrag des Lackes) werden unter Reinraumbedingungen durchgeführt (Klasse 100).

Man erhält eine bei Raumtemperatur (25°C) klare, farblose Platte mit einer Lichtdurchlässigkeit von deutlich über 80%. Erwärmen der Platte auf 35°C führt zu einer Reduktion der Lichtdurchlässigkeit um mehr als 20%.

Abkühlung der Platte auf 25°C führt innerhalb von weniger als 1 Stunde wieder zu einer Erhöhung der Lichtdurchlässigkeit auf deutlich über 80%.

**Patentansprüche**

1. Verglasungssystem mit temperaturgesteuerter Lichtdurchlässigkeit unter Verwendung von Kunststoffen, dadurch gekennzeichnet, dass das Verglasungssystem aus einer Polymermischung P, gebildet aus verschiedenen Polymerkomponenten P1 und P2 besteht oder diese enthält, die eine untere kritische Lösungstemperatur (LCST) kleiner 150 Grad C besitzt, wobei unterhalb der kritischen Lösungstemperatur eine einphasige, transparente Polymermischung vorliegt und oberhalb der kritischen Lösungstemperatur Entmischung zu den Polymerkomponenten P1 und P2 stattfindet, wobei die Brechungsindices der Polymerkomponenten P1 und P2 voneinander abweichen.

2. Verglasungssysteme gemäss Anspruch 1, dadurch gekennzeichnet, dass die Polymermischung P aus zwei verschiedenen Polymeren P1 und P2 aufgebaut ist, die sich in ihrem Brechungsindex um wenigstens 0,01 unterscheiden.

3. Verglasungssysteme gemäss den Ansprüchen 1 und 2, dadurch gekennzeichnet, dass die Polymermischung P eine LCST unterhalb 100 Grad C besitzt.

4. Verglasungssysteme gemäss Anspruch 1, dadurch gekennzeichnet, dass die Transmission der Probe im Temperaturbereich von 10 Grad C unterhalb LCST bis mindestens 50 Grad C unterhalb der LCST > 80% beträgt.

5. Verglasungssystem gemäss den Ansprüchen 1 bis 4, dadurch gekennzeichnet, dass im Zustand der Entmischung oberhalb der LCST zwei Polymerphasen nebeneinander vorliegen, von denen zumindest eine Polymerphase eine Domänengrösse im Bereich von 10 $nm^2$ bis $10^8$ $nm^2$ aufweist, wobei sich die Polymerphasen in ihren Brechungsindices um wenigstens 0,01 unterscheiden.

6. Verglasungssysteme gemäss den Ansprüchen 1 bis 5, dadurch gekennzeichnet, dass der Polymermischung P noch eine oder mehrere Substanzen W beigefügt sind.

7. Verglasungssysteme gemäss den Ansprüchen 1 bis 6, dadurch gekennzeichnet, dass die Glastemperatur Tg der Polymermischung P um wenigstens 50 Grad C unterhalb der LCST liegt.

8. Verglasungssysteme gemäss den Ansprüchen 1 bis 7, dadurch gekennzeichnet, dass wenigstens eines der die Polymermischung P bildenden Polymeren zu mindestens 5 Gew.-% eine oder mehrere Gruppen mit einer von einem Kohlenstoff ausgehenden Doppel- oder Dreifachbindung enthält.

9. Verfahren gemäss den Ansprüchen 1 bis 8, dadurch gekennzeichnet, dass wenigstens eines der die Polymermischung P bildenden Polymeren einen Gehalt von mehr als 10 Gew.-% an kovalent gebundenem Halogen aus der Gruppe Fluor, Chlor oder Brom enthält.

10. Verglasungssysteme gemäss den Ansprüchen 1 bis 9, dadurch gekennzeichnet, dass wenigstens eines der die Polymermischung P bildenden Polymeren einen Gehalt von mehr als 10 Gew.-% an kovalent gebundenem Chalkogen aus der Gruppe Sauerstoff oder Schwefel enthält.

11. Verglasungssysteme gemäss den Ansprüchen 1 bis 10, dadurch gekennzeichnet, dass die Polymermischung P im Bereich von Raumtemperatur bis LCST eine einzige Glastemperatur Tg aufweist und keine kristallinen Bereiche enthält.

12. Verglasungssysteme gemäss den Ansprüchen 1 bis 11, dadurch gekennzeichnet, dass die Polymermischung P Alterungs- und/oder UV-Schutzmittel in Anteilen von 0,01 bis 5 Gew.-% enthält.

13. Verglasungssysteme gemäss den Ansprüchen 1 bis 12, dadurch gekennzeichnet, dass wenigstens eines der beiden Polymeren P1 und P2 ein (mittleres) Molekulargewicht ($M_w$) von mindestens 2000 aufweist.

14. Verglasungssysteme gemäss den Ansprüchen 1 bis 13, dadurch gekennzeichnet, dass wenigstens 0,1 Gew.-% des Polymerisats P1 mit dem Polymerisat P2 kovalent verbunden ist.

15. Verglasungssysteme gemäss den Ansprüchen 1 bis 14, dadurch gekennzeichnet, dass im Polymergemisch P das Mischungsverhältnis des Polymeren P1 zum Polymeren P2 im Bereich 98:2 Gew.-Teile bis 2:98 Gew.-Teilen liegt.

16. Verglasungssystem gemäss den Ansprüchen 1 bis 15, dadurch gekennzeichnet, dass die Polymermischung P eingefärbt ist.

17. Verglasungssysteme gemäss den Ansprüchen 1 bis 16, dadurch gekennzeichnet, dass die Polymermischung P unmittelbar ohne Trägergrundlage verwendet wird.

18. Verglasungssysteme gemäss den Ansprüchen 1 bis 16, dadurch gekennzeichnet, dass sich die Polymermischung P auf einer Trägergrundlage befindet.

19. Verglasungssysteme gemäss Anspruch 18, dadurch gekennzeichnet, dass die Polymermischung P unter Verwendung einer Trägergrundlage und einer Abdeckung eingebettet ist.

20. Verglasungssysteme gemäss den Ansprüchen 18 und 19, dadurch gekennzeichnet, dass die Trägergrundlage eingefärbt ist.

21. Verglasungssysteme gemäss den Ansprüchen 1 bis 20, dadurch gekennzeichnet, dass die Polymermischung P, die gegebenenfalls auf der Trägergrundlage aufgebracht oder eingebettet ist, die geometrische Form einer Platte oder Scheibe besitzt.

22. Verglasungssysteme gemäss den Ansprüchen 1 bis 21, dadurch gekennzeichnet, dass die Polymermischung P in einer Schichtdicke von < 1 mm zur Anwendung kommt.

23. Verglasungssysteme gemäss den Ansprüchen 1 bis 16, dadurch gekennzeichnet, dass die Polymermischung P in einen als Matrix M dienenden Werkstoff eingelagert ist.

24. Verglasungssysteme gemäss Anspruch 23, dadurch gekennzeichnet, dass der Brechungsindex des die Matrix M bildenden Werkstoffs mit dem Brechungsindex der Polymermischung P unterhalb der LCST übereinstimmt.

25. Verglasungssysteme gemäss den Ansprüchen 1 bis 16 und 21 bis 24, dadurch gekennzeichnet, dass die Polymermischung P in eine als Werkstoff dienende Matrix M in Form diskreter Teilchen mit einem Durchmesser im Bereich von 20 nm bis 200 µm eingelagert ist.

26. Verglasungssysteme gemäss den Ansprüchen 1 bis 25, dadurch gekennzeichnet, dass wenigstens eine Polymerkomponente P1 der Polymermischung P2 durch Emulsionspolymerisation hergestellt worden ist.

27. Verglasungssysteme gemäss Anspruch 26, dadurch gekennzeichnet, dass beide Polymerkomponenten P1 und P2 der Polymermischung P in einer wenigstens zwei Stufen umfassenden Emulsionspolymerisation hergestellt worden sind.

28. Verglasungssysteme gemäss den Ansprüchen 1 bis 27, dadurch gekennzeichnet, dass die die Polymermischung P aufbauenden Polymerkomponenten P1 und P2 mit der Matrix M keine verträgliche Polymermischung eingehen.

29. Verglasungssysteme gemäss den Ansprüchen 1 bis 28, dadurch gekennzeichnet, dass die Bedingungen

$n_D$ Matrix $> n_D$ Polymerisat P1 ($\Delta n > 0,01$
$n_D$ Matrix $< n_D$ Polymerisat P2 ($\Delta n > 0,01$)
$n_D$ Matrix $\cong n_D$ Polymermischung ($\Delta n < 0,01$)

gleichzeitig erfüllt sind.


**Claims**

1. Glazing system with temperature-controlled light transmittance using plastics, characterised in that the glazing system consists of or contains a polymer mixture P formed from various polymer components P1 and P2, which has a lower critical solution temperature (LCST) of less than 150°C, whilst below the critical solution temperature there is a single-phase transparent polymer mixture and above the critical solution temperature unmixing occurs into the polymer components P1 and P2, the refractive indices of the polymer components P1 and P2 differing from each other.

2. Glazing system as claimed in claim 1, characterised in that the polymer mixture P is made up of two different polymers P1 and P2 which differ by at least 0.01 in their refractive index.

3. Glazing systems as claimed in claims 1 and 2, characterised in that the polymer mixture P has an LCST of below 100°C.

4. Glazing systems as claimed in claim 1, characterised in that the transmission of the sample in the temperature range from 10°C below the LCST to at least 50°C below the LCST is greater than 80%.

5. Glazing system as claimed in claims 1 to 4, characterised in that, in the state of unmixing above the LCST, two polymer phases occur side by side, of which at least one polymer phase has a domain size in the range from 10 $nm^2$ to $10^8$ $nm^2$, the polymer phases differing by at least 0.01 in their refractive indices.

6. Glazing systems as claimed in claims 1 to 5, characterised in that one or more substances W are also added to the polymer mixture P.

7. Glazing systems as claimed in claims 1 to 6, characterised in that the glass transition temperature Tg of the polymer mixture P is at least 50°C below the LCST.

8. Glazing systems as claimed in claims 1 to 7, characterised in that at leat one of the polymers forming the polymer mixture P contains at least 5% by weight of one or more groups having a double or triple bond starting from a carbon.

9. Process as claimed in claims 1 to 8, characterised in that at least one of the polymers forming the polymer mixture P contains more than 10% by weight of covalently bound halogen selected from the group comprising fluorine, chlorine and bromine.

10. Glazing systems as claimed in claims 1 to 9, characterised in that at least one of the polymers forming the polymer mixture P contains more than 10% by weight of covalently bound chalcogen selected from the group comprising oxygen and sulphur.

11. Glazing systems as claimed in claims 1 to 10, characterised in that the polymer mixture P in the range from ambient temperature to LCST has a single glass transition temperature Tg and contains no crystalline areas.

12. Glazing systems as claimed in claims 1 to 11, characterised in that the polymer mixture P contains anti-ageing components and/or anti-UV agents in amounts of from 0.01 to 5% by weight.

13. Glazing systems as claimed in claims 1 to 12, characterised in that at least one of the two polymers P1 and P2 has an (average) molecular weight ($M_w$) of at least 2000.

14. Glazing systems as claimed in claims 1 to 13, characterised in that at least 0.1% by weight of the polymer P1 is covalently bound to the polymer P2.

15. Glazing systems as claimed in claims 1 to 14, characterised in that, in the polymer mixture P, the mixing ratio of polymer P1 to polymer P2 is in the range from 98:2 parts by weight to 2:98 parts by weight.

16. Glazing system as claimed in claims 1 to 15, characterised in that the polymer mixture P is coloured.

17. Glazing systems as claimed in claims 1 to 16, characterised in that the polymer mixture P is used directly without any support base.

18. Glazing systems as claimed in claims 1 to 16, characterised in that the polymer mixture P is located on a support base.

19. Glazing systems as claimed in claim 18, characterised in that the polymer mixture P is embedded using a support base and a cover.

20. Glazing systems as claimed in claims 18 and 19, characterised in that the support base is coloured.

21. Glazing systems as claimed in claims 1 to 20, characterised in that the polymer mixture P, which is optionally applied to or embedded on the support base, has the geometric shape of a sheet or pane.

22. Glazing systems as claimed in claims 1 to 21, characterised in that the polymer mixture P is used in a layer thickness of less than 1 mm.

23. Glazing systems as claimed in claims 1 to 16, characterised in that the polymer mixture P is incorporated in a material serving as the matrix M.

24. Glazing systems as claimed in claim 23, characterised in that the refractive index of the material which forms the matrix M coincides with the refractive index of the polymer mixture P below the LCST.

25. Glazing systems as claimed in claims 1 to 16 and 21 to 24, characterised in that the polymer mixture P is incorporated in a matrix M serving as material, in the form of discrete particles with a diameter in the range from 20 nm to 200 µm.

26. Glazing systems as claimed in claims 1 to 25, characterised in that at least one polymer component P1 of the polymer mixture P2 is produced by emulsion polymerisation.

27. Glazing systems as claimed in claim 26, characterised in that both polymer components P1 and P2 of the polymer mixture P have been prepared in a process of emulsion polymerisation comprising at least two steps.

28. Glazing systems as claimed in claims 1 to 27, characterised in that the polymer components P1 and P2 which make up the polymer mixture P do not form a compatible polymer mixture with the matrix M.

29. Glazing systems as claimed in claims 1 to 28, characterised in that the conditions

$n_D$ matrix $> n_D$ polymer P1 ($\Delta n > 0.01$)

$n_D$ matrix $< n_D$ polymer P2 ($\Delta n > 0.01$)

$n_D$ matrix $\cong n_D$ polymer mixture ($\Delta n < 0.01$)

are satisfied simultaneously.

## Revendications

1. Système de vitrage présentant une transparence régulée par la température, utilisant des matières plastiques, caractérisé en ce que le système de vitrage est constitué d'un mélange de polymères P. formé par différents composants polymères ou contenant ces derniers, qui présente une température inférieure critique de dissolution (LCST) inférieure à 150°C, un mélange de polymères transparent, en une seule phase, étant présent en-dessous de la température critique de dissolution et une démixion en les composants polymères P1 et P2 ayant lieu au-dessus de la température critique de dissolution, les indices de réfraction des composants polymères P1 et P2 étant différents l'un de l'autre.

2. Système de vitrage selon la revendication 1, caractérisé en ce que le mélange de polymères P est constitué de deux différents polymères P1 et P2, dont les indices de réfraction diffèrent entre eux d'au moins 0,01.

3. Système de vitrage selon la revendication 1 ou 2, caractérisé en ce que le mélange de polymères P présente une LCST inférieure à 100°C.

4. Système de vitrage selon la revendication 1, caractérisé en ce que la transmission de l'éprouvette dans la gamme des températures de 10°C en-dessous de la LCST est > 80%.

5. Système de vitrage selon les revendications 1 à 4, caractérisé en ce que dans l'état de démixion au-dessus de la LCST, deux phases de polymères coexistent, dont au moins l'une présente une dimension de domaine de $10\,nm^2$ à $10^8\,nm^2$, les indices de réfraction des phases de polymères se différenciant d'au moins 0,01.

6. Système de vitrage selon les revendications 1 à 5, caractérisé en ce que le mélange de polymères P contient encore une ou plusieurs substances W.

7. Système de vitrage selon les revendications 1 à 6, caractérisé en ce que la température de transition vitreuse Tg de mélange de polymères P est d'au moins 50°C inférieure à la LCST.

8. Système de vitrage selon les revendications 1 à 7, caractérisé en ce qu'au moins un des polymères formant le mélange de polymères P contient au moins 5% en poids d'un ou de plusieurs groupes avec une ou plusieurs liaisons doubles ou triples partant d'un atome de carbone.

9. Système de vitrage selon les revendications 1 à 8, caractérisé en ce qu'au moins un des polymères formant le mélange de polymères P présente une teneur supérieure à 10% en poids d'halogène lié par covalence, appartenant au groupe des fluor, chlore ou brome.

10. Système de vitrage selon les revendications 1 à 9, caractérisé en ce qu'au moins un des polymères formant le mélange de polymères P présente une teneur supérieure à 10% en poids de chalcogène lié par covalence, appartenant au groupe de l'oxygène ou de soufre.

11. Système de vitrage selon les revendications 1 à 10, caractérisé en ce que le mélange de polymères P présente, aux environs de la température ambiante, une seule température de transition vitreuse Tg et ne contient pas de région cristalline.

12. Système de vitrage selon les revendications 1 à 11, caractérisé en ce que le mélange de polymères P contient des agents de protection contre le vieillissement et/ou contre les rayons UV, dans une proportion de 0,01 à 5% en poids.

13. Système de vitrage selon les revendications 1 à 12, caractérisé en ce qu'au moins l'un des deux polymères P1 et P2 présente une masse moléculaire (moyenne) ($M_w$) d'au moins 2000.

14. Système de vitrage selon les revendications 1 à 13, caractérisé en ce qu'au moins 0,1% en poids du polymère P1 et P2 est lié par covalence au polymère P2.

15. Système de vitrage selon les revendications 1 à 14, caractérisé en ce que dans le mélange de polymères P, le rapport de mélange du polymère P1 au polymère P2 est situé dans la gamme de 98:2 parties en poids à 2:98 parties en poids.

16. Système de vitrage selon les revendications 1 à 15, caractérisé en ce que le mélange de polymères P est coloré.

17. Système de vitrage selon les revendications 1 à 16, caractérisé en ce que le mélange de polymères P est utilisé directement, sans couche de support.

18. Système de vitrage selon les revendications 1 à 16, caractérisé en ce que le mélange de polymères P se trouve sur une couche de support.

19. Système de vitrage selon la revendication 18, caractérisé en ce que le mélange de polymères P est inséré entre une couche de support et une couche de couverture.

20. Système de vitrage selon les revendications 18 et 19, caractérisé en ce que la couche de support est colorée.

21. Système de vitrage selon les revendications 1 à 20, caractérisé en ce que le mélange de polymères P, qui éventuellement est porté par la couche de support, ou inséré sur celle-ci, présente la forme géométrique d'une plaque ou vitre.

22. Système de vitrage selon les revendications 1 à 21, caractérisé en ce que le mélange de polymères P est utilisé avec une épaisseur de couche < 1 mm.

23. Système de vitrage selon les revendications 1 à 16, caractérisé en ce que le mélange de polymères P est incorporé dans une matière servant de matrice M.

24. Système de vitrage selon la revendication 23, caractérisé en ce que l'indice de réfraction de la matière constituant la matrice M est identique à l'indice de réfraction du mélange de polymères P en dessous de la LCST.

25. Système de vitrage selon les revendications 1 à 16 et 21 à 24, caractérisé en ce que le mélange de polymères P est incorporé dans une matière servant de matrice M sous la forme de particules discrètes ayant un diamètre dans la gamme de 20 nm à 200 μm.

26. Système de vitrage selon les revendications 1 à 25, caractérisé en ce qu'au moins l'un des composants polymères P1 et P2 a été préparé par polymérisation en émulsion.

27. Système de vitrage selon la revendication 26, caractérisé en ce que les deux composants polymères P1 et P2 du mélange de polymères P ont été préparés par une polymérisation en émulsion comprenant au moins deux étapes.

28. Système de vitrage selon les revendications 1 à 27, caractérisé en ce que les composants polymères P1 et P2 constituant le mélange de polymères P ne constituent pas un mélange de polymères compatible avec la matrice M.

29. Système de vitrage selon les revendications 1 à 28, caractérisé en ce que les conditions

$n_D$ matrice $> n_D$ polymère P1 ($\Delta n > 0,01$)
$n_D$ matrice $< n_D$ polymère P2 ($\Delta n > 0,01$)
$n_D$ matrice $\cong n_D$ mélange de polymères
($\Delta n < 0,01$)

sont remplies simultanément.